**Europäisches Patentamt**

**European Patent Office**

**Office européen des brevets**

(11) Publication number: **0 228 812**

**A1**

(12) **EUROPEAN PATENT APPLICATION**

(21) Application number: 86309212.8

(22) Date of filing: 26.11.86

(51) Int. Cl.⁴: **F 16 D 55/224**
F 16 D 55/22, B 61 H 5/00

(30) Priority: 29.11.85 GB 8529475

(43) Date of publication of application:
15.07.87 Bulletin 87/29

(84) Designated Contracting States:
DE FR GB IT

(71) Applicant: LUCAS INDUSTRIES Public limited company
Great King Street
Birmingham, B19 2XF West Midlands(GB)

(72) Inventor: Harrison, Anthony William
63 Middle Park Road
Selly Oak Birmingham, B29 4BH(GB)

(74) Representative: Stringer, David Hiram et al,
W.P. THOMPSON & CO Coopers Building Church Street
Liverpool L1 3AB(GB)

(54) Improvements relating to disc brakes.

(57) The present specification discloses a disc brake suitable for use on a railway vehicle. In certain railway vehicles the disc brakes are inaccessible or short of space in the region inboard of the disc though they do not have the usual constraints due to a road wheel rim as are common in car and truck brake installations.

The present invention provides a disc brake wherein the caliper (1) is simply and positively supported by a mounting which uses a minimum of space whilst avoiding any conflict of tolerances and deflections, and any cross-binding due to frictional forces, as can occur in twin pin sliding brake constructions. The present invention comprises a caliper (1) arranged to straddle a disc (3) and to press a friction pad (7,27) against each side of the disc (3) when actuated. The caliper (1) is mounted at one circumferential end region with respect to the disc (3), on a first support member (9) by means of a sliding pin connection (11) extending parallel to the axis of the disc (3), and at the other circumferential end region with respect to the disc (3), by a second support member (13) which is joined both to said other circumferential end region and to a fixed member (17), by flexible couplines (15,19). These flexible couplings (15,19) deform or move to allow the caliper (1) to slide on the pin connection (11) without the pin connection (11) binding due to the effect of the large braking forces.

Croydon Printing Company Ltd.

DESCRIPTION.                    **0228812**

IMPROVEMENTS RELATING TO DISC BRAKES.

The present invention relates to a disc brake for use on a vehicle.

In particular the present invention relates to a disc brake suitable for use on a railway vehicle. In certain railway vehicles the disc brakes are inaccessible or short of space in the region inboard of the disc, though they do not have the usual constraints due to a road wheel rim as are common in car and truck brake installations.

The aim of the present invention is to provide a disc brake which has a caliper which is simply and positively supported by a mounting which uses a minimum of space whilst avoiding any conflict of tolerances and deflections and any cross binding due to frictional forces, as can occur in twin pin sliding brake constructions.

According to the present invention there is provided a disc brake comprising a caliper which is arranged to straddle a disc and to press a friction pad against each side of the disc when actuated, the caliper being mounted at one circumferential end region with respect to the disc, on a first support member by means of a pin connection extending parallel to the axis of the disc, and at the other circumferential end region with respect to the disc, by a second support member which is joined both to said other circumferential end region and to a fixed member, by flexible couplings.

In a preferred embodiment of the present invention the caliper is open-topped for friction pad inspection and exchange, and is of the reactive type, an hydraulic actuator being arranged to act directly on a friction pad on one side of the disc, reactive forces conveyed by the caliper acting on the friction pad on the other side of the disc. To allow these reactive forces to act, and to guide the caliper movement, the caliper is arranged to slide along the pin connection, the flexible couplings moving to allow the second support member to tilt as the reactive forces cause the caliper to slide on the pin connection.

Preferably the flexible couplings comprise a resilient material e.g. a rubber or plastic compound, moulded in a bore or recess around an end region of said second support member. Alternatively the end regions of said second support member may be secured by washers and nuts to an annular bush of resilient material which is an interference fit as above. As an alternative to such flexible resilient couplings, mechanical universal joints or any other suitable flexible coupling may be substituted.

Preferably the pin connection comprises an elongate pin extending between the arms of a Y-shaped yoke forming said first support member, the leading end of the caliper with respect to forward rotation of the disc having an elongate bore through which the pin extends. Preferably the length of said bore is sufficient to extend on each side of the disc beyond the line of pad drag. Further, the pin is preferably so positioned that the line of drag force passes near to or through the longitudinal axis of the pin.

By virtue of the present invention the flexible mounting of said second support avoids, especially in the sliding pin preferred embodiment, any conflict of tolerances and deflections, which would occur with a second pin and also avoids the cross binding effect of friction on a sliding abutment.

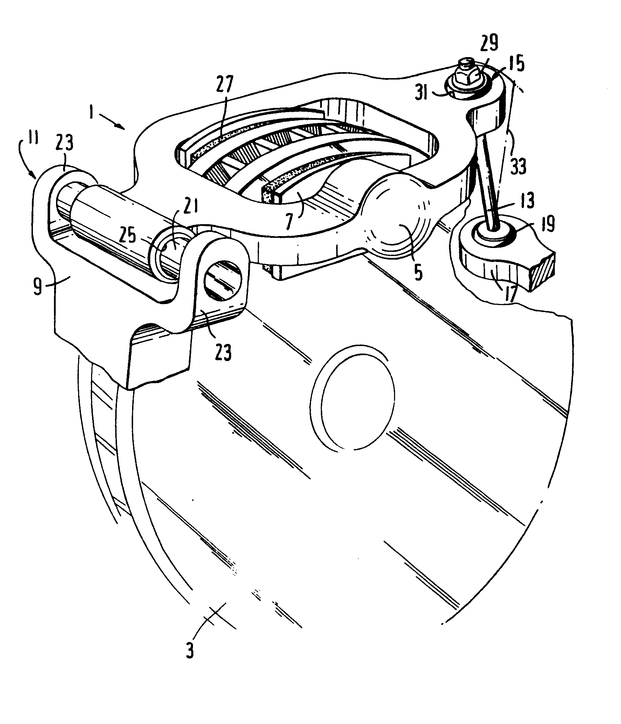

The present invention will now be further described, by way of example, with reference to the accompanying drawing, wherein a perspective view of a preferred embodiment of the present invention is shown.

The preferred embodiment of the present invention shown in the accompanying drawing, comprises an open topped caliper 1 straddling a braking disc 3, with a hydraulic actuator 5 arranged to act directly on a friction pad 7 located on one side of the disc 3. One circumferential end region of the caliper 1, taken with respect to the disc 3, is connected to a first support member 9 by a sliding pin connection 11, the other circumferential end region being connected to one end region of a second support member 13 by a flexible coupling 15, with the other end region of the second support member 13 connected to a fixed support 17 by a further flexible coupling 19.

The sliding pin connection 11 comprises an elongate pin 21 which extends between the arms 23 of the Y-shaped first support member 9, parallel to the axis of the disc 3, the pin 21 extending axially slidably through a bore 25 in said one circumferential end region of the caliper 1. Thus, when the hydraulic actuator 5 is actuated reaction forces move the caliper 1 along the pin 21 to press the other friction pad 27 against the braking disc 3. The pin 21 and bore 25 thus guide the movement of the caliper 1 parallel to the axis of the disc 3, the bore 25 being of sufficient length to extend, with advantage, on each side of the disc beyond the line of pad drag. Further, to avoid undesirable moments, the pin is so positioned that its longitudinal axis is intersected by the line of total drag force exerted on the pads. Alternatively the line of pad drag can pass close to the pin axis, thus reducing such undesirable moments to a minimum.

The second support member 13 comprises an elongate tie rod, one end region of which is secured by a washer and nut 29 to a resilient bush forming flexible coupling 15, the resilient bush being made, for example, from rubber or a plastics material moulded into a bore 31 provided in said other circumferential end region of the caliper 1. The other end region of the tie rod 13 is similarly secured to a further resilient bush forming the further flexible coupling 19 with said fixed support 17. Alternatively, the resilient bushes forming said flexible couplings 15,19 may be replaced by articulated, e.g. universal, joints or other flexible couplings as desired.

In use, the said one circumferential end region including the sliding pin connection 11 is located at the leading end of the brake with respect to the forward direction of movement of the vehicle, and brake application causes the caliper to be guided along the pin 21 to apply the friction pads 7,27 on to opposite sides of the disc 3. With this movement of the caliper 1 along pin 21, the tie rod 13 tilts to the position shown by the dash-dot line 33, the flexible couplings 15,19 flexing to allow for this movement whilst providing support for the caliper 1.

By virtue of the provision of the tie rod 13 and flexible couplings 15,19 any conflict of tolerances and deflection which would occur with a second pin connection, and the cross-binding effect of friction on a sliding abutment, are avoided.

CLAIMS

1.  A disc brake comprising a caliper (1) which is arranged to straddle a disc (3) and to press a friction pad (7,27) against each side of the disc (3) when actuated, characterised in that the caliper (1) is mounted at one circumferential end region with respect to the disc (3), on a first support member (9) by means of a pin connection (11) extending parallel to the axis of the disc (3), and at the other circumferential end region with respect to the disc (3), by a second support member (13) which is joined both to the said other circumferential end region and to a fixed member (17), by flexible couplings (15,19).

2.  A disc brake as claimed in claim 1, wherein said second support member (13) is an elongate member, the flexible coupling (15) joining said other circumferential region of the caliper (1) to said second support member (13) comprising a resilient material moulded in a recess (31) in said other circumferential region and around one end region of said second support member (13), and the flexible coupling (19) joining said second support member (13) to said fixed member (17) comprising a resilient material moulded in a recess in said fixed member (17) around the other end region of said second support member (13).

3.  A disc brake as claimed in claim 1, wherein the second support member (13) is elongate and the flexible couplings (15,19) each comprise an annular bush of resilient material, and the bushes being secured one over each end region of the elongate second support member (13), with one bush being an interference fit in a recess (31) in said other circumferential end region of the caliper (1), and the other bush being an interference fit in a recess in said fixed member (17).

4. A disc brake as claimed in claim 3, wherein each annular bush is secured to the said second support member (13) by using washers and nuts.

5. A disc brake as claimed in claim 1, wherein said flexible couplings are in the form of mechanical universal joints.

6. A disc brake as claimed in any one of claims 1 to 5, wherein the pin connection (11) comprises an elongate pin (21) extending between the arms (23) of a Y-shaped yoke (9) forming said first support member, the leading end of the caliper (1) with respect to the rotation of the disc (3) corresponding to forward vehicle motion, having an elongate bore (25) through which the pin (21) extends.

7. A disc brake as claimed in claim 6, wherein the length of said elongate bore (25) is sufficient to extend on each side of the disc (3) beyond the lines of pad drag.

8. A disc brake as claimed in claim 6 or 7, wherein the pin (21) is positioned so that the lines of pad drag force pass through the longitudinal axis of the pin (21).

.........................................................

### European Patent Office

**EUROPEAN SEARCH REPORT**

EP 86 30 9212

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | EP-A-0 080 951 (SOCIETE ANONYME D.B.A.) <br> * Whole document; figures 1-6 * | 1 | F 16 D 55/224 <br> F 16 D 55/22 <br> B 61 H 5/00 |
| A | GB-A-1 333 599 (GIRLING LTD) <br> * Page 4, lines 58-74; figures 12-15 * | 1 | |
| A | EP-A-0 076 202 (BENDBERICA S.A.) | | |
| A | EP-A-0 080 950 (SOCIETE ANONYME D.B.A.) | | |
| A | GB-A-2 039 646 (TOKICO LTD) | | **TECHNICAL FIELDS SEARCHED (Int. Cl 4)** |
| A | EP-A-0 036 368 (D.B.A. SOCIETE ANONYME) | | F 16 D 55/00 <br> B 61 H 5/00 |
| A | EP-A-0 100 273 (SOCIETE ANONYME D.B.A.) | | |
| A | EP-A-0 059 128 (SOCIETE ANONYME D.B.A.) | | |
| A | FR-A-2 393 981 (SOCIETE ANONYME D.B.A.) | | |
| | --- -/- | | |

The present search report has been drawn up for all claims

| Place of search | Date of completion of the search | Examiner |
|---|---|---|
| THE HAGUE | 27-03-1987 | BRAEMS C.G.I. |

**European Patent Office**

**EUROPEAN SEARCH REPORT**

| | DOCUMENTS CONSIDERED TO BE RELEVANT | | Page 2 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | FR-A-2 160 461 (WESTINGHOUSE BREMSEN- UND APPARATEBAU GmbH) ----- | | |

TECHNICAL FIELDS SEARCHED (Int. Cl.4)

The present search report has been drawn up for all claims

| Place of search | Date of completion of the search | Examiner |
|---|---|---|
| THE HAGUE | 27-03-1987 | BRAEMS C.G.I. |